(19) Europäisches Patentamt
European Patent Office
Office européen des brevets

(11) EP 0 980 508 B1

(12) **EUROPÄISCHE PATENTSCHRIFT**

(45) Veröffentlichungstag und Bekanntmachung des Hinweises auf die Patenterteilung:
**11.09.2002 Patentblatt 2002/37**

(21) Anmeldenummer: **98933544.3**

(22) Anmeldetag: **07.05.1998**

(51) Int Cl.$^7$: **G01F 1/84**

(86) Internationale Anmeldenummer:
**PCT/DE98/01356**

(87) Internationale Veröffentlichungsnummer:
**WO 98/052000 (19.11.1998 Gazette 1998/46)**

(54) **VERFAHREN UND EINRICHTUNG ZUR ERKENNUNG UND KOMPENSATION VON NULLPUNKTEINFLÜSSEN AUF CORIOLIS-MASSEDURCHFLUSSMESSER**

METHOD AND DEVICE FOR DETECTING AND COMPENSATING ZERO POINT INFLUENCES ON CORIOLIS-TYPE MASS FLOWMETERS

PROCEDE ET DISPOSITIF POUR LA DETECTION ET LA COMPENSATION D'INFLUENCES AU POINT ZERO SUR DES DEBITMETRES MASSIQUES A FORCE DE CORIOLIS

(84) Benannte Vertragsstaaten:
**AT BE CH DE DK ES FI FR GB GR IE IT LI LU MC NL PT SE**

(30) Priorität: **09.05.1997 DE 19719587**

(43) Veröffentlichungstag der Anmeldung:
**23.02.2000 Patentblatt 2000/08**

(73) Patentinhaber: **Bailey-Fischer & Porter GmbH
37079 Göttingen (DE)**

(72) Erfinder:
- **DEPPE, Lothar
D-37081 Göttingen (DE)**
- **LESJAK, Ralf
D-37124 Rosdorf (DE)**
- **PAPENBROCK, Axel
D-37075 Göttingen (DE)**

(74) Vertreter: **Meissner, Peter E., Dipl.-Ing. et al
Meissner & Meissner,
Patentanwaltsbüro,
Hohenzollerndamm 89
14199 Berlin (DE)**

(56) Entgegenhaltungen:
**EP-A- 0 282 217**
**EP-A- 0 749 006**
**DE-A- 19 525 253**
**US-A- 4 311 054**
**US-A- 5 663 509**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren sowie eine Meßgerät zur Messung, insbesondere des Durchflusses strömender Medien, nach dem Coriolis-Prinzip mit mindestens einer, das strömende Medium leitenden Meßrohrleitung, mindestens einem, das Meßrohr in Schwingung versetzenden Schwingungserzeuger, sowie mit mindestens zwei, die Rohrbewegung erfassenden Sensoren und einer, die Meßsignale verarbeitenden Auswerteelektronik.

Coriolis-Massedurchflußmesser für strömende Medien sind weit verbreitet und in verschiedensten Ausführungsformen bekannt.

Allgemein wird bei einem Coriolis-Massedurchflußmesser mindestens eine zu ihrem geometrischen Mittelpunkt symmetrische Meßrohrleitung durch einen Schwingungserzeuger in Schwingung versetzt. Die Schwingung des Meßrohres wird dabei von einem Regelkreis kontrolliert, der seine Istwertinformation von mindestens einem der o.a., die Rohrbewegung erfassenden Sensoren erhält.

Die Schwingung der Meßrohrleitung verursacht im strömenden Medium die Corioliskraft. Die Corioliskraft oszilliert mit der Frequenz der Rohrschwingung. Sie bewirkt eine zusätzliche Bewegung, die der durch den Schwingungserzeuger angeregten Rohrbewegung überlagert ist und zu einer kleinen, phasenverschobenen Bewegung der Rohrabschnitte um den geometrischen Mittelpunkt des Meßrohres führt. Diese Phasenverschiebung stellt den Meßeffekt dar. Sie ist proportional der Corioliskraft und somit proportional der fließenden Masse. Die Rohrbewegung wird durch zwei i.a. symmetrisch zum Rohrmitteipunkt angeordnete Sensoren erfaßt und der Meßelektronik zur Auswertung zugeführt.

Die Corioliskraft ist definiert als :

$$\underline{Fc} = -2\ m\ (\underline{\omega} \times \underline{v})$$

mit $\underline{\omega}$ = Winkelgeschwindigkeit des Meßrohres und $\underline{v}$ = Fließgeschwindigkeit der Flüssigkeit im Meßrohr. Da die Winkelgeschwindigkeit eine Funktion der Rohramplitude ist, ist auch das Meßsignal eine Funktion der Amplitude. Bei der Auswertung wird deshalb auf die Rohramplitude normiert, d.h., m ≈ Meßsignal/ Rohramplitude. In Komponentenschreibweise lauten die beiden Sensorsignale bei den o.a. symmetrischen Vorgängen:

$$\underline{A} = \underline{R} + \underline{Fc}$$

und

$$\underline{B} = \underline{R} - \underline{Fc}$$

mit $\underline{R}$ = Rohramplitude und $\underline{Fc}$ = Coriolisamplitude. Durch Addition wird daraus die doppelte Rohramplitude

$$\underline{A} + \underline{B} = \underline{2R}$$

und durch Subtraktion die doppelte Coriolisamplitude

$$\underline{A} - \underline{B} = \underline{2Fc}$$

an der Position der Sensoren. Kommt es nun zu unsymmetrischen Signalstörungen, bei denen sich einzelne Signalkomponenten oder auch beide Komponenten der Sensoren ändern, führt dies zu Meßfehlern und Regelungsproblemen.

Der geometrische Mittelpunkt des Meßrohres ist frei von zusätzlichen, durch die Corioliskraft bedingten, Bewegungen. Bei vielen Ausführungsformen von Massedurchflußmessern ist er der Befestigungspunkt des o.a. Schwingungserzeugers.

Die Installation des schwingungsfähigen Systems "Coriolis-Massedurchflußmesser" in ein Leitungssystem führt zur schwingungstechnischen Ankopplung des Massedurchflußmessers an die Umgebung. Dadurch können sowohl Struktur- als auch Hydraulikschwingungen mit der Arbeitsfrequenz des Massedurchflußmessers angeregt werden, die in den Durchflußmesser zurückwirken und von der Meßelektronik nicht erkannt werden. Die Wechselwirkungen dieser Schwingungen treten im allgemeinen unsymmetrisch auf und können zu erheblichen Störungen des Meßgerätes führen. Eine Folge dieser Wechselwirkungen können Instabilitäten des Regelkreises sein, d.h., es können Funktionsstörungen eintreten.
Die ungünstigste Folge dieser Wechselwirkungen sind erhebliche Störungen der meßtechnischen Eigenschaften. Ursache hiertür sind statische und dynamische Nullpunktverschiebungen.

Statische Nullpunktverschiebungen, also scheinbare Meßsignale bei Null-Durchfluß, werden üblicherweise mittels der Meßelektronik kompensiert. Da sie als Offset in die Durchflußberechnung eingehen, führen die statischen Nullpunktverschiebungen insbesondere im unteren Durchflußbereich des Massedurchflußmessers zu großen Meßwertabweichungen.

Als dynamische Nullpunktverschiebungen gelten hier die bei Durchfluß durch Parametervariation in der Installation entstehenden zussätzlichen, in der Regel nich konstanten Verschiebungen. Kennzeichnend für sie ist, daß sie als von allen möglichen Prozeßparametem abhängige, bisher nicht identifiziert, quantisier- und kompensierbare Größen, bisher nicht korrigierbare Meßwertabweichungen über den gesamten Meßbereich zur Folge haben und zusätzlich zu Reproduzierbarkeitsproblemen führen.

Nach dem Coriolis-Meßprinzip arbeitende Strömungsmeßgeräte sind beispielsweise bekannt aus der EP 0 282 217 A2, der EP 0 749 006 A1, der US 4 311 054 und der US 5 663 509, wobei aus den letzten drei Schriften Anordnungen zu entnehmen sind. bei denen Sensoren am Ort oder in der Nähe der Schwingungserzeugung angeordnet sind.
Die EP 0 282 217 A2 zeigt, dass aus der Phasendifferenz der Sensoren ein Amplitudenverhältnis der entsprechenden Signale ermittelt werden kann.

Der Erfindung liegt von dieser Problematik ausgehend die Aufgabe zugrunde, hinsichtlich eines Verfahrens sowie eines Massedurchflußgerätes, unabhängig von der Meßrohrausführung, eine Kompensation der statischen und dynamischen Störeinflüsse auf das betriebs- und meßtechnische Verhalten zu erreichen und das gesamte System störunanfällig zu machen.

Die gestellte Aufgabe wird hinsichtlich eines Verfahrens der gattungsgemäßen Art erfindungsgemäß durch die kennzeichnenden Merkmale des Patentanspruches 1 gelöst. Vorteilhafte Ausgestaltungen sind in den abhängigen Ansprüchen 2 bis 5 angegeben.
Hinsichtlich eines gattungsgemäßen Massendurchflußmessers ist die gestellte Aufgabe erfindungsgemäß durch die kennzeichnenden Merkmale des Patentanspruches 6 gelöst. Weitere vorteilhafte Ausgestaltungen sind in den übrigen abhängigen Ansprüchen angegeben.

Die Erfindung zeichnet sich dadurch aus, daß zusätzlich zu den beiden symmetrisch zum Schwingungsort angeordneten Sensoren ein weiterer, dritter Sensor am Ort der Schwingungserzeugung auf einem beliebig geformten Meßrohr angeordnet ist. Damit entsteht ein örtlicher Fixpunkt, über welchen die Bezugslage der an den beiden anderen Sensoren entstehenden Auslenkungen klar definiert ist.
Der Betrag der addierten Amplituden $\underline{A}+\underline{B}$, wie er oft zur Amplitudenregelung Verwendung findet, ist von der durch die Corioliskraft hervorgerufenen Phasenverschiebung abhängig.
Der erfindungsgemäße dritte Sensors liefert dagegen als weiteres Meßsignal die reine Rohramplitude und damit ein durchfluß- und störungsunabhängiges Istwertsignal für den Regelkreis. Mittels dieses zusätzlichen Signals wird mit den beiden symmetrisch angeordneten Sensoren der Massedurchfluß aus dem Signal jeweils eines dieser Sensoren und dem Rohramplitudensignal des dritten Sensors berechnet, d.h., der Massedurchfluß wird 2 mal berechnet. Dabei entsprechen die beiden, mittels drittem Sensor ermittelten Durchflüsse den realen Vorgängen um den geometrischen Mittelpunkt des Meßrohres. Die Summe der beiden Durchflüsse ergibt, wie oben gezeigt, den Durchfluß. Da die Signale im normalen Betriebszustand wie o.a. symmetrisch sind, sind die beiden ermittelten Durchflüsse gleich groß. Treten Störungen auf - diese sind wie o.a. im allgemeinen unsymmetrisch - werden die zusätzlich ermittelten Durchflüsse unsymmetrisch, wobei die Richtung der Störung erkennbar wird.

Die Summe ändert sich ebenfalls, d.h., bedingt durch die Störung mißt das Gerät falsch. Durch ständigen Vergleich der berechneten Durchflüsse und Korrektur der störungsbeeinflußten Signalseite mittels entsprechender Korrekturalgorithmen wird die Symmetrie wieder hergestellt und die Störung eliminiert.

Damit ist die Aufgabe, Störungen aus dem meßtechnischen Verhalten zu eliminieren, gelöst.

Ein weiterer Teilaspekt der Aufgabe, der das betriebstechnische Verhalten zu verbessern beabsichtigt, ist durch zwei erfindungsgemäße spezielle Ausgestaltungsmerkmale gelöst. Durch die doppelte Ermittlung des Durchflusses ist Redundanz gegeben. Bei großen Störungen oder einem Ausfall eines Sensors kann mit einem Auswerteteil die volle Meßfähigkeit aufrechterhalten werden. Die Eliminierung von Störungen ist dann jedoch nicht mehr gegeben. Das Regelverhalten wird dadurch verbessert, daß ein vom Durchfluß unbeeinflußtes Istwertsignal zur Verfügung steht.
Ein weiterer wesentlicher Aspekt der Erfindung liegt darin, daß der Ausfall (Überschreitung der vorher festgelegten Toleranzgrenze) eines Sensors von dem Meßumformer automatisch erkannt, und die Meßwerterfassung in der Weise geändert wird, daß das Gerät weiterhin einwandfrei arbeitet.

Der Benutzer wird durch die Software (Display oder Kommunikation) auf den ausgefallenen Sensor hingewiesen und kann gegebenenfalls Reparaturmaßnahmen einleiten. Diese müssen nicht sofort erfolgen, sondern, wenn es der Prozeß zuläßt. Die Wahrscheinlichkeit eines Totalausfalls des Meßsystems läßt sich somit erheblich verringern. Das System ist sozusagen redundant angelegt.

Die Wirkungsweise der Erfindung wird nachfolgend beispielhaft dargestellt. Zur Erläuterung der gelösten Problematik wird die Nullpunktkompensation mit Hilfe der 3 erfindungsgemäß angeordneten Sensoren weiter unten formal kurz hergeleitet.

Doch zunächst sei kurz die redundante Arbeitsweise bzw. redundante Auslegung des Verfahrens und der Einrichtung beschrieben:

Um das Meßrohr in mechanische Schwingungen zu versetzen wird mit Hilfe einer elektromagnetischen Einrichtung eine Kraft auf das Meßrohr gegeben (Sensor/Treiber C bzw. Sensor/Treiber D). Die Kraft ist proportional zum Strom durch die Treiberspule. Das Meßrohr ist ein Schwingkreis mit einer Güte Q.

Der benötigte Treiberstrom, um eine mechanische Schwingamplitude A zu erzeugen, ist abhängig von der Güte, d. h. den Verlusten des mechanischen Schwingkreises. Die höchste Güte besitzt der nichteingebaute, leere Aufnehmer, d. h. der Treiberstrom ist am geringsten. Dieser Referenzwert wird gemessen und gespeichert.

Nach Einbau des Aufnehmers und Befüllung mit einem Medium kann sich die Dämpfung des Schwingkreises erhöhen, d. h. der Treiberstrom nimmt zu. Auch dieser Strom wird gemessen und gespeichert. In diesem Betriebszustand erfolgt ebenfalls ein Systemnullpunktabgleich. d. h. die Durchflußanzeige wird zu Null gesetzt. Kommt es jetzt zu Betriebszuständen, in denen Schwingungsenergie durch eine hydraulische oder mechanische Kopplung nach Außen gegeben wird (. z. B. bei gashaltigen Medien oder Gasblasen in der Installation), steigt die Dämpfung des mechanischen Schwingkreises und somit der Treiberstrom.

Durch eine Rückkopplung der abgegebenen Schwingungsenergie kommt es zu einer Verschiebung des dynamischen Nullpunktes, welche proportional zu dem Treiberstrom ist.

Durch den kontinuierlich gemessenen Treiberstrom ist es somit möglich, den Betrag des dynamischen Systemnullpunktes zu errechnen. Das Vorzeichen wird mit Hilfe des dritten Sensors ermittelt (s. h. erster Patentantrag).

Des weiteren besitzt ein gedämpfter mechanischer Schwingkreis eine geringfügig andere Frequenz als ein ungedämpfter. Dieses wirkt sich auf die Dichtemessung aus, da die Dichte des im Aufnehmer befindlichen Mediums aus der Resonanzfrequenz des Aufnehmers errechnet wird. Mit Hilfe des gemessenen Treiberstromes ist es möglich, diese Frequenzverschiebung zu kompensieren.

Es ist somit möglich, mit Hilfe des dritten Sensors und einer Messung des Treiberstromes eine dynamische Nullpunktverschiebung und eine Dichteverschiebung aufgrund einer sich ändernden Dämpfung des Aufnehmerschwingkreises zu kompensieren.

Es zeigen:

Fig.1 das Schwingungsmodell für eine gerade Rohrführung.

Fig.2 das Schwingungsmodell für eine kompakte gewickelte Rohrführung.

Fig.3 eine Ausführungsform mit einer im Messabschnitt doppelten parallelen Rohrführung.

Fig.4 Vektordiagramm 1. Beispiel, kein Durchfluß

Fig.5 Vektordiagramm 2. Beispiel, mit Durchfluß

Fig.6 Vektordiagramm 3. Beispiel, Durchfluß mit Störung

Fig.7 Blockschaltbild zur analogen Berechnung von $\underline{D}_{CA}$ und $\underline{D}_{CB}$

Fig.8 Elektronische Realisierung zur Hardware in Fig 7.

Fig.9 Sensoranordnung zusätzlich mit Temperatursensoren.

Fig.10 Betriebszustandsmatrix des Systems gemäß Fig 9

Zum Messprinzip:

Figur 1 zeigt das Schwingungsmodell für eine gerade Rohrführung im Bereich des Messabschnittes. Dargestellt ist modellhaft derjenige Rohrabschnitt, bei welchem der dort vorliegende Durchfluß gemessen werden soll.
Figur 2 zeigt ein Schwingungsmodell einer im Messabschnitt gewickelten Rohrführung. Diese wird gewählt, wenn das Durchflußmessgerät eine kompakte Bauform aufweisen soll.

Die Grundschwingung des Messrohres an den Stellen A, B und C gemäß Figur 1 und Figur 2 läßt sich folgendermaßen beschreiben:

$$S_{ga,gb,gc}\,(t) = \hat{S}_{a,b,c} \bullet (\sin \omega t +/- \frac{\varphi}{2}) \qquad \text{Gleichung 1}$$

Die Phasenverschiebung φ entsteht aufgrund der auf das Messrohr wirkenden Corioliskräfte und teilt sich, bezogen auf den Symmetriepunkt C, zwischen den Punkten A und B auf. D.h., am Punkt C ist die Phasenverschiebung φ=0, am Punkt A ist die Phasenverschiebung -φ/2 und am Punkt B beträgt sie +φ/2.
Für die nachfolgenden Betrachtungen erfolgt eine Normierung der Amplituden auf die Amplitude am Punkt C.

$$k_a = \frac{\hat{S}_c}{\hat{S}_a}$$

$$k_b = \frac{\hat{S}_c}{\hat{S}_b}$$

$$k_c = 1$$

Es ergibt sich :

$$s_a(t)= \hat{S}_a \bullet (\sin\omega t - \frac{\varphi}{2}) \bullet k_a$$

$$s_b(t)= \hat{S}_b \bullet (\sin\omega t + \frac{\varphi}{2}) \bullet k_b$$

$$s_c(t)= \hat{S}_c \bullet (\sin\omega t)$$

Eine Vereinfachung der Betrachtung ergibt sich durch die Umsetzung in komplexe Zeiger (komplexe Zeiger werden durch einen Unterstrich dargestellt, der Betrag des komplexen Zeigers wird ohne Unterstrich dargestellt).

$$\underline{\hat{a}} = \frac{s_a(t)}{e^{j\omega}}$$

$$\underline{\hat{b}} = \frac{s_b(t)}{e^{j\omega}}$$

$$\underline{\hat{c}} = \frac{s_c(t)}{e^{j\omega}}$$

Der komplexe Effektivwert ist dann:

$$\underline{A} = \frac{\hat{a}}{\sqrt{2}}$$

$$\underline{B} = \frac{\hat{b}}{\sqrt{2}}$$

$$\underline{C} = \frac{\hat{c}}{\sqrt{2}}$$

in der komplexen Normalform ergibt sich dann an den Stellen A, B und C:

| Summenform: | Exponentialform: |
|---|---|
| $\underline{A} = c_a - ja$<br>$\underline{B} = c_b + ja$<br>$\underline{C} = c$ | $\underline{A} = A \bullet e^{j-\varphi/2}$<br>$\underline{B} = B \bullet e^{j+\varphi/2}$<br>$\underline{C} = C$ |

wobei φ proportional zu dem Massendurchfluß ist.
Der Zeiger $\underline{C}$ ist immer real, da er die reale Achse des Koordinatenkreuzes bildet.
Die Differenz von dem Bezugspunkt C zu A und B ist:

$$\underline{D}_{CA} = \underline{C} - \underline{A}$$

$$\underline{D}_{CB} = \underline{C} - \underline{B}$$

Der durchflußabhängige Anteil ist:

$$\underline{D}_{CACB} = \underline{D}_{CA} - \underline{D}_{CB}$$

Dieses entspricht dem durchflußabhängigen Anteil bei der Betrachtung von nur zwei Sensoren $\underline{A}$ und $\underline{B}$ : $\underline{D}_{BA} = \underline{B} - \underline{A} = \underline{D}_{CACB}$

Durch die drei Sensoren ergibt sich des weiteren ein Anteil zur Kompensation bei Unsymmetrien:

$$\underline{S}_{CACB} = \underline{D}_{CA} + \underline{D}_{CB}$$

Der Durchfluß läßt sich jetzt folgendermaßen berechnen:

$$Qm = k \bullet \arctan \frac{\mathrm{Im}\,(\underline{D}_{CACB} + |\underline{S}_{CACB}|}{C} \qquad \text{Gleichung 2}$$

k ist die Proportionalitätskonstante und beinhaltet Materialkonstanten wie z.B. die Rohrgeometrie und die Materialsteifigkeit.

Für kleine Phasenverschiebungen gilt: $\tan\varphi \approx \varphi$

$$Qm = k \bullet \frac{\mathrm{Im}\,(\underline{D}_{CACB} + |\underline{S}_{CACB}|}{C} \qquad \text{Gleichung 3}$$

Der Durchfluß Qm ergibt sich damit durch Ermittlung der Meßwerte bei entsprechender Phasenlage. Anhand von verschiedenen Zahlenbeispielen soll nun die Wirkungsweise der Nullpunktkompensation verdeutlicht werden. Die aufgeführten Beispiele sind Zahlenbeispiele. Die angegebenen Werte entsprechen nicht der Realität, sondern sollen nur die Wirkungsweise der Kompensation verdeutlichen.

Zunächst zeigt Figur 3 eine mögliche Bauform mit einer im Messabschnitt parallelen doppelten Rohrführung. Der unten eintretende Flüssigkeitsstrom teilt sich in zwei parallel verlaufende Rohre auf. An den Meßorten A und B sind Sensoren, beispielsweise Wegsensoren, angeordnet, über welche die Schwingungsamplituden ermittelt werden können. Diese Sensoren sind mit einer in Fig 7 und Fig 8 dargestellten Elektronik verbunden, mit welcher weitere Schwingungsparameter ermittelbar sind. Erfindungsgemäß ist am Schwingungserzeuger bzw. am Schwingungserzeugungsort C ein weiterer Sensor angeordnet. Auf diese Weise kann die Amplitude und die genaue Nullphasenlage ermittelt werden. Von dieser ausgehend können dann die genauen Phasenlagen der Schwingungen am Ort A und B ermittelt werden. Die Aufteilung des Meßflüssigkeitsstromes in zwei Teilströme hat den Vorteil, daß die meßbare Amplitude durch gegenphasige Anregung verdoppelbar ist und außerdem resonante Schwingungen und Nebenmoden kompensiert werden.
Des weiteren ist in erfindungsgemäßer Ausgestaltung ein Temperatursensor vorgesehen, mit welchem die Meßrohrtemperatur meßbar ist, die bei der weiteren Auswertung temperaturabhängiger Größen mitberücksichtigt wird.

Beispiel 1: Kein Durchfluß

Figur 4 zeigt hierzu das entsprechende Vektordiagramm.
Sensorsignale:

$\underline{A}$=5
$\underline{B}$=5
$\underline{C}$=5

Berechnungen:

$$\underline{D}_{CA}=\underline{C}-\underline{A}=5-5=0$$

$$\underline{D}_{CB}=\underline{C}-\underline{B}=5-5=0$$

$$\underline{D}_{CACB}=\underline{D}_{CA}-\underline{D}_{CB}=0$$

$$\underline{S}_{CACB}=\underline{D}_{CA}+\underline{D}_{CB}=0$$

Ergebnis:

$$Qm = k \cdot \frac{\mathrm{Im}\left(\underline{D}_{CACB} + \left|\underline{S}_{CACB}\right|\right)}{C} = 0$$

Das entsprechende Zeigerdiagramm ist in Figur 4 dargestellt. Die Zeiger, d.h., die Vektoren, sind in dieser Darstellung parallel und gleich lang; im Ergebnis heißt dies: der Durchfluß ist Null.
Beispiel 2: von Null verschiedener Durchfluß ohne Störung.
Figur 5 zeigt das entsprechende Vektordiagramm.
Sensorsignale:

$$\underline{A}=5-j2$$

$$\underline{B}=5+j2$$

$$\underline{C}=5$$

Berechnungen:

$$\underline{D}_{CA} = \underline{C} - \underline{A} = (5)-(5-j2) = 0 + j2$$

$$\underline{D}_{CB} = \underline{C} - \underline{B} = (5)-(5+j2) = 0 + -j2$$

$$\underline{D}_{CACB} = \underline{D}_{CA} - \underline{D}_{CB} = (j2)-(-j2) = 0 + j4$$

$$\underline{S}_{CACB} = \underline{D}_{CA} + \underline{D}_{CB} = (j2)+(-j2) = 0 + j0$$

Ergebnis:

$$Qm = k \cdot \frac{Im\left(\underline{D}_{CACB} + \left|\underline{S}_{CACB}\right|\right)}{C} = k \cdot \frac{4+0}{5} = 0{,}8 \cdot k$$

D.h., in diesem Beispiel ergibt sich ein Durchfluß Qm von 0,8 k.
Es ist erkennbar, daß das Zeigerdiagramm symmetrisch ist, d.h., die Schwingung, d.h., auch die Phasenverschiebung die sich durch den von Null verschiedenen Durchfluß ergibt, tritt symmetrisch auf. Siehe Figur 5.
Beispiel 3: Durchfluß, Störer additiv zu A mit 180° Phasenlage zu C Figur 6 zeigt das entsprechende Vektordiagramm.
Störsignal additiv zu Sensor A:

$$\underline{St} = -1$$

Sensorsignale:

$$\underline{A} = 4-j2$$

$$\underline{B} = 5+j2$$

$$\underline{C} = 5$$

Berechnungen:

$$\underline{D}_{CA} = \underline{C} - \underline{A} = (5)-(4-j2) = 1+j2$$

$$\underline{D}_{CB} = \underline{C} - \underline{B} = (5)-(5+j2) = 0 -j2$$

$$\underline{D}_{CACB} = \underline{D}_{CA} - \underline{D}_{CB} = (1+j2)-(-j2) = 1+j4$$

$$\underline{S}_{CACB} = \underline{D}_{CA} + \underline{D}_{CB} = (1+j2)+(-j2) = 1 + j0$$

Ergebnis:

$$Qm = k \cdot \frac{Im\left(\underline{D}_{CACB} + \left|\underline{S}_{CACB}\right|\right)}{C} = k \cdot \frac{4+0}{5} = 0{,}8 \cdot k$$

Wie in Figur 6 zu erkennen ist, sind die Schwingungsanteile sowohl in Amplitude wie auch in Phasenlage nicht mehr symmetrisch. Durch die erfindungsgemäße Anordnung des dritten Sensors am Ort der Schwingungserzeugung entsteht somit anhand der verfügbaren 3 Signale A, B, C eine genaue Ermittelbarkeit des Phasenbezugspunktes um C. Davon ausgehend ist das Störsignal als solches nunmehr genau zuordenbar und als solches sowohl in Betrag wie auch in Phasenlage sehr genau kompensierbar.

Bei einer Anordnung mit den üblichen nur zwei Sensoren wäre zwar eine Asymmetrie der Schwingung zu erkennen, aber nicht ihre Phasenlage und ihre Amplitude. Damit wäre eine effektive Kompensation nicht möglich.

Bei der erfindungsgemäßen Vorgehensweise mit drei Sensoren, wobei der dritte Sensor am Ort der Schwingungserzeugung plaziert ist, wirkt sich der Störer somit nicht mehr auf die Berechnung des tatsächlichen Durchflusses aus.

Anhand von zwei Blockschaltbildern Figur 7 und 8 werden nachfolgend zwei Verfahren bzw. zwei Einrichtungen zur meßtechnischen Lösung beschrieben.

Figur 7 stellt die Hardware zur analogen Berechnung von $\underline{D}_{CA}$ und $\underline{D}_{CB}$ dar.
Dabei ist die erfindungsgemäße Einbindung dreier Sensorwerte mitberücksichtigt.

An dem Meßrohr sind drei Sensoren (2)(3)(4) zur Erfassung der Rohrbewegung befestigt.
Als mögliche Sensoren kommen Bewegungs-, Geschwindigkeits- bzw. Beschleunigungssensoren in Frage. Die Sensorsignale werden mit Hilfe der Vorverstärker (7) (8) (9) verstärkt. Die Verstärkung $k_a$ und $k_b$ der vom Prozessor verstellbaren Verstärker (11) und (12) ist derart eingestellt, daß die Signale $\underline{A}$, $\underline{B}$ und $\underline{C}$ die gleiche Amplitude besitzen. Die Differenzverstärker (14) und (15) bilden die Differenz $\underline{D}_{CA}$ und $\underline{D}_{CB}$. Die Schaltlogik bildet aus dem Sensorsignal $\underline{C}$ ein zu $\underline{C}$ um 90° phasenverschobenes Schaltsignal gleicher Frequenz zum Schalten der Analogschalter (17) (18). Die Schalter wirken somit als 90° Phasendemodulator und geben die geschalteten Halbwellen auf die Integratoren (20) (21) (22) (23). Durch die 90° phasenverschobene Gleichrichtung wird erreicht, daß nur der durch die Corioliskraft hervorgerufene komplexe Anteil zu den Integratoren gelangt.
Die Integratoren werden derart von der Schaltlogik angesteuert, daß sie nach Integration der Halbwelle dem Analog Digitalumformer das integrierte Signal für eine ausreichende Zeit zur Verfügung stellen und danach abintegriert werden, um die nachfolgende, zugehörige Halbwelle zu integrieren. Dieser Vorgang wiederholt sich kontinuierlich, so daß die durchflußabhängigen Signale $\underline{D}_{CA}$ und $\underline{D}_{CB}$ durchgängig erfaßt werden. Der Vorteil dieser kontinuierlichen Meßwerterfassung ist, daß eine Erfassung des Meßeffektes über die gesamte Zeit erfolgt, somit sind Schwebungen mit niederfrequenten Störern ausgeschlossen.

Über die Schaltiogik (18) bekommt der Prozessor (25) die Information, wann gültige Signale (24) anstehen. Die Analog/Digital Umformung (24) kann derart gestaltet sein, daß ein Multiplexer die Eingangssignale an einen ADC schaltet.
Der Gleichrichtwert von $\underline{C}$ wird mit Hilfe eines Meßgleichrichters (15) und über eine Analog-/Digital Umformung (24) dem Prozessor (25) zugeführt. D.h., der Betrag C von $\underline{C}$ wird ermittelt.
Die Frequenz von $\underline{C}$ wird durch einen Frequenzmeßbaustein (16) gemessen. Mit Hilfe der Frequenz ist es möglich, den Effektivwert bzw. Gleichrichtwert der integrierten Halbwellen am Ausgang der Integratoren (20, 21, 22, 23) zu bestimmen.
Gleichung 3 gilt sowohl für Effektiv- als auch für Gleichrichtwerte, da diese bei einer sinusförmigen Signalform durch einen konstanten Faktor verknüpft sind und dieser sich durch die Betrachtung der Verhältnisse aus der Formel kürzen läßt.

Es lassen sich somit durch den Prozessor (25) die imaginären Anteile $\underline{D}_{CACB}$ und $\underline{S}_{CACB}$ zur Berechnung des Durchflusses mittels Gleichung 23 errechnen.

Die Proportionalitätskonstante k aus Gleichung 3 ist temperaturabhängig, deshalb erfolgt eine Temperaturmessung der Meßrohrtemperatur. Das Temperaturmeßsignal (1) (z.B. PT100) wird durch den Eingangsverstärker (6) verstärkt und mit Hilfe von (24) digitalisiert.

Die Ein-/Ausgabeeinheit (26) kann ein Display zur Datenausgabe, eine Tastatur zur Dateneingabe, einen oder mehrere impulsausgänge, einen oder mehrere Stromausgänge, verschiedene Schalt- Ein/ Ausgänge sowie verschiedene Kommunikationskanäle wie serielle Schnittstellen oder z.B. eine HART-Protokoll-Schnittstelle enthalten.
Die Aufrechterhaltung der Meßrohrschwingung erfolgt durch einen softwaregesteuerten PID-Regler (27) mit der Möglichkeit eines programmierbaren Sollwertes kp, ki und kd.

Das Eingangssignal von (27) ist das Sensorsignal von C (3). Der Istwert ist der Gleichrichtwert von C (15).
Das Ausgangssignal von (27) wird mittels eines Verstärkers (10) verstärkt und liefert die Energie zur Aufrechterhaltung der mechanischen Schwingung an den Erregerschaltkreis (5). Der Erreger (5) kann z.B. ein elektromechanischer Erreger sein. D.h.,die Amplitude der Rohrschwingung an der Stelle C wird konstant gehalten.

Der Vorteil einer Regelung auf Punkt C ist, daß die Amplitude durchflußunabhängig ist. Die sonst gebräuchliche Regelung auf die Summe der Amplituden von Punkt A und C ist abhängig von der Phasenverschiebung φ, da der Betrag von $\underline{A}$ und $\underline{C}$ phasenabhängig ist.

Figur 8 zeigt die elektronische Realisierung der digitalen Berechnung von $\underline{D}_{CA}$ und $\underline{D}_{CB}$ mit einem DSP. An dem Meßrohr sind drei Sensoren (2) (3) (4) zur Erfassung der Rohrbewegung befestigt.

Als mögliche Sensoren kommen Bewegungs-, Geschwindigkeits- bzw. Beschleunigungssensoren in Frage. Des weiteren erfolgt eine Messung der Meßrohrtemperatur. Die Sensorsignale werden mit Hilfe der Vorverstärker (6) (7)(8) (9) verstärkt. Antialiasing Filter (11, 12, 13, 14) verhindern eine Verletzung des Abtasttheorems. Analog Digital Converter (15, 16, 17, 18) (z.B. Wägeverfahren, Successive Approximation oder Sigma Delta -Verfahren) formen die Analogsignale in Digitalsignale um.

Eine Synchronisation von (16), (17) und (18) führt zu einer synchronen Abtastung der Sensorsignale (2, 3, 4).

Ein Digital to Analog Converter (19) liefert das Analogsignal, welches mittels eines Verstärkers (10) die Energie zur Aufrechterhaltung der mechanischen Schwingung an den Erregerschaltkreis (5) liefert. Der Erreger (5) kann z.B. ein elektromechanischer Erreger sein.

Im Gegensatz zu dem vorherigen Blockschaltbild erfolgt die Filterung und Berechnung digital in dem DSP (Digital Signal Prozessor).

Die Ein- /Ausgabeeinheit kann ein Display zur Datenausgabe, eine Tastatur zu Dateneingabe, einen oder mehrere Impulsausgänge, einen oder mehrere Stromausgänge, verschieden Schaltein- und ausgänge, verschiedene Kommunikationskanäle sowie verschiedene Kommunikationskanäle wie serielle Schnittstellen oder z.B. eine HART- Protokoll-Schnittstelle enthalten.

Fig 9 zeigt eine Anordnung mit einem Meßrohr, durch welches das Medium fließt. In der Mitte des Rohres sind hier 2 Treiber C und D angeordnet, die gleichzeitig als Wegsensoren arbeiten, bzw abwechselnd als Wegsensoren oder Treiber arbeiten können. Die beiden Wegsensoren A und B sind symmetrisch um den zentralen Schwingungserzeugungsort bei C/D plaziert. An den Sensororten A und B sind ebenfalls Temperatursensoren T1 und T2 angeordnet. Die Einbeziehung der Temperaturmessung an den Sensororten A und B hat die oben bereits beschriebene Konsequenz.

Fig 10 zeigt eine Übersichtstafel, aus welcher selbsterklärend bzw selbstoffenbarend alle Zustände im Falle eines Ausfalles oder einer Störung eines Sensors hervorgehen.

**Patentansprüche**

1. Verfahren zur Messung des Durchflusses strömender, insbesondere flüssiger Medien, nach dem Coriolis-Messprinzip, bei welchem ein vom Medium durchströmtes Messroh in Schwingung versetzt wird und an 2 verschiedenen Punkten des Messrohres die Auslenkung durch Sensoren gemessen und aus Amplitude und weiteren Schwingungsparametem der Durchfluss ermittelt wird,
**dadurch gekennzeichnet,**
**daß** zusätzlich am Ort der Schwingungserzeugung die Auslenkung durch einen zusätzlichen Sensor gemessen wird und vom. Ort der Schwingungserzeugung ausgehend, die Phasenlage der an den beiden anderen, symmetrisch vom Schwingungserzeugungsort entfernten, Messpunkten gemessenen Auslenkung ermittelt wird und daß bei Ausfall eines der Sensoren dies automatisch erkannt und die Messung auf der Basis der beiden anderen korrekt arbeitenden Sensoren die Messung solange weitergeführt wird, bis der defekte Sensor ausgetauscht ist.

2. Verfahren zur Messung des Durchflusses strömender Medien nach Anspruch 1,
**dadurch gekennzeichnet,**
**daß** das strömende Medium in zwei parallel geführte Teilströme aufgeteilt wird und die beiden parallelen Rohre in welchen die Teilströme geführt werden, gegenphasig zu Schwingung angeregt und die Auslenkungen der beiden parallelen Rohrabschnitte relativ zueinander gemessen werden.

3. Verfahren zur Messung des Durchflusses strömender Medien nach einem oder mehreren der vorhergehenden Ansprüche,
**dadurch gekennzeichnet,**
**daß** die Ermittlung der Schwingungsgrößen phasenempfindlich, d.h., durch Lock-In-Technik vorgenommen wird, bei welcher die Anregungsfrequenz der Schwingung wesentliche Eingangsgröße ist.

4. Verfahren zur Messung des Durchflusses strömender Medien nach Anspruch 3,
**dadurch gekennzeichnet,**

**daß** die Anregung der Schwingung bei einer Resonanzfrequenz des Rohrsystems erfolgt.

5. Verfahren zur Messung des Durchflusses strömender Medien nach einem oder mehreren der vorhergehenden Ansprüche,
**dadurch gekennzeichnet,**
**daß** die Meßrohrtemperatur ermittelt und in der Auswertung der Amplituden und Phasenlagen mitberücksichtigt wird.

6. Einrichtung zur Messung des Durchflusses strömender, insbesondere flüssiger Medien, nach dem Coriolis-Messprinzip, bei welchem ein vom Medium durchströmtes Meßrohr in Schwingung versetzbar ist und an mindestens zwei verschiedenen Meßpunkten die Auslenkung des Meßrohres über Sensoren gemessen und aus Amplitude und weiteren Schwingungsparametern der Durchfluß mit Hilfe einer elektrischen Auswerteeinheit ermittelbar ist,
**dadurch gekennzeichnet,**
**daß** ein weiterer Sensor am Ort der Schwingungserzeugung (C) angeordnet ist und die beiden anderen Sensoren an Orten (A, B) plaziert sind, welche hinsichtlich ihrer auf den Rohrabschnitt des Meßrohres bezogenen Entfernung vom Ort der Schwingungserzeugung (C) symmetrisch angeordnet sind, daß die Auswerteeinheit Mittel zur Messung der Phasenlage der an den beiden Orten (A,B) gemessenen Auslenkung und logische Mittel enthält, welche beim Ausfall eines der Sensoren dies zum einen melden und zum anderen den defekten Sensor auswertemäßig durch Interpolation solange nachbilden, bis der defekte Sensor ausgetauscht ist.

7. Einrichtung zur Messung des Durchflusses strömender, insbesondere flüssiger Medien nach Anspruch 6,
**dadurch gekennzeichnet,**
**daß** mindestens ein Temperatursensor im Bereich des Meßrohres angeordnet ist, mit welchem die Meßrohrtemperatur erfassbar ist.

8. Einrichtung zur Messung des Durchflusses strömender, insbesondere flüssiger Medien nach Anspruch 7,
**dadurch gekennzeichnet,**
**daß** zwei Temperatursensoren vorgesehen sind, wobei an jedem von dem Schwingungsort beabstandeten Sensor ein Temperatursensor angeordnet ist.

## Claims

1. A method of measuring the flow of flowing media, and especially of liquid media, using the Coriolis principle of measurement wherein a test pipe through which the medium is flowing is set into vibration and the deflection thereof is measured by sensors at 2 different points of the test pipe, and wherein the flow is determined from the amplitude and other parameters of the vibratory motion,
**characterised in that**
the deflection is additionally measured by an additional sensor at the point where the vibrations are produced and, commencing from the point where the vibrations are produced, the phase angle of the deflection measured at the other two measuring points that are symmetrically spaced from the point where the vibrations are produced is determined, and **in that** failure of one of the sensors is automatically detected and the measuring process is continued on the basis of the other two correctly working sensors until such time as the defective sensor has been replaced.

2. A method of measuring the flow of flowing media in accordance with Claim 1,
**characterised in that**
the flowing medium is sub-divided into two parallel guided partial streams and the two parallel pipes through which the partial streams are fed are excited such as to vibrate in antiphase, and **in that** the deflections of the two parallel pipe-sections are measured relative to one another.

3. A method of measuring the flow of flowing media in accordance with one or more of the preceding Claims,
**characterised in that**
the determination of the vibratory magnitudes is effected in phase-sensitive manner i.e. by means of a lock-in technique wherein the excitation frequency of the vibration is the essential input variable.

4. A method of measuring the flow of flowing media in accordance with Claim 3,
**characterised in that**

the excitation of the vibration is effected at a resonant frequency of the pipe system.

**5.** A method of measuring the flow of flowing media in accordance with one or more of the preceding Claims, **characterised in that** the temperature of the test pipe is determined and taken into account in the evaluation of the amplitudes and phase angles.

**6.** A device for measuring the flow of flowing media, and especially of liquid media, using the Coriolis principle of measurement wherein a test pipe through which the medium is flowing is set into vibration and the deflection of the test pipe is measured by sensors at at least two different measuring points, and wherein the flow is determinable from the amplitude and other parameters of the vibratory motion with the aid of an electrical evaluating unit,
**characterised in that**
a further sensor is arranged at the point (C) where the vibrations are produced and the other two sensors are placed at points (A, B) which are arranged symmetrically on the pipe-section of the test pipe as regards the spacing thereof from the point where the vibrations are produced (C), **in that** the evaluating unit includes means for measuring the phase angle of the deflection measured at the two points (A, B) and also includes logic means which firstly provide an indication in the event of failure of one of the sensors and secondly emulate the defective sensor during the evaluation by means of an interpolation process until such time as the defective sensor has been replaced.

**7.** A device for measuring the flow of flowing media, and especially of a liquid medium, in accordance with Claim 6,
**characterised in that**
at least one temperature sensor, with which the temperature of the test pipe is detectable, is arranged in the vicinity of the test pipe.

**8.** A device for measuring the flow of flowing media, and especially of a liquid medium, in accordance with Claim 7,
**characterised in that**
there are provided two temperature sensors of which one temperature sensor is arranged at each of the sensors spaced from the point of vibration.

## Revendications

**1.** Procédé pour mesurer le débit de milieux qui s'écoulent, en particulier liquides, selon le principe de mesure de Coriolis, dans lequel on fait osciller un tube de mesure traversé par le milieu et, en deux points différents du tube de mesure, la déviation est mesurée par des capteurs et le débit est déterminé à partir de l'amplitude et d'autres paramètres d'oscillation,
**caractérisé en ce que**, de façon supplémentaire, à l'endroit où sont engendrées les oscillations, la déviation est mesurée par un capteur supplémentaire et, à partir de l'endroit où sont engendrées les oscillations, la position de phase de la déviation mesurée aux deux autres points de mesure, éloignés symétriquement de l'endroit où sont engendrées les oscillations, est déterminée, et **en ce que**, en cas de panne d'un des capteurs, cela est automatiquement reconnu et la mesure est poursuivie sur la base des deux autres capteurs travaillant correctement jusqu'à l'échange du capteur défectueux.

**2.** Procédé pour mesurer le débit de milieux qui s'écoulent selon la revendication 1,
**caractérisé en ce que** le milieu qui s'écoule est réparti en deux courants partiels guidés en parallèle et les deux tubes parallèles, dans lesquels les courants partiels sont guidés, sont amenés en oscillation à contre-phase, et les déviations des deux tronçons de tube parallèles sont mesurées l'une par rapport à l'autre.

**3.** Procédé pour mesurer le débit de milieux qui s'écoulent selon une ou plusieurs des revendications précédentes, **caractérisé en ce que** la détermination des valeurs d'oscillation est effectuée de façon sensible à la phase, c'est-à-dire par une technique de blocage, pour laquelle la fréquence d'excitation de l'oscillation est la grandeur d'entrée importante.

**4.** Procédé pour mesurer le débit de milieux qui s'écoulent selon la revendication 3,
**caractérisé en ce que** l'excitation de l'oscillation est effectuée pour une fréquence de résonance du système de tube.

**5.** Procédé pour mesurer le débit de milieux qui s'écoulent selon une ou plusieurs des revendications précédentes,

**caractérisé en ce que** la température du tube de mesure est détectée et est prise en compte dans l'exploitation des amplitudes et positions de phase.

**6.** Dispositif pour mesurer le débit de milieux qui s'écoulent, en particulier liquides, selon le principe de mesure de Coriolis, dans lequel on peut faire osciller un tube de mesure traversé par le milieu et, en au moins deux points de mesure différents, la déviation du tube de mesure est mesurée par des capteurs et le débit peut être déterminé, à partir de l'amplitude et d'autres paramètres d'oscillation, à l'aide d'une unité d'exploitation électrique,
**caractérisé en ce qu'**un autre capteur est agencé à l'endroit où est engendrée l'oscillation (C) et les deux autres capteurs sont placés en des endroits (A, B) qui sont agencés symétriquement relativement à leur éloignement, rapporté au tronçon du tube de mesure, de l'endroit où est engendrée l'oscillation (C), **en ce que** l'unité d'exploitation comporte des moyens pour mesurer la position de phase de la déviation mesurée aux deux endroits (A, B) et des moyens logiques, qui, en cas de panne d'un des capteurs, signalent d'une part cela et, d'autre part, simulent le capteur défectueux, pour l'exploitation, par interpolation jusqu'à l'échange du capteur défectueux.

**7.** Dispositif pour mesurer le débit de milieux qui s'écoulent, en particulier liquides, selon la revendication 6,
**caractérisé en ce qu'**au moins un capteur de température est agencé dans la zone du tube de mesure, grâce auquel la température du tube de mesure peut être détectée.

**8.** Dispositif pour mesurer le débit de milieux qui s'écoulent, en particulier liquides, selon la revendication 7,
**caractérisé en ce que** deux capteurs de température sont prévus, un capteur de température étant agencé sur chaque capteur écarté de l'endroit d'oscillation.

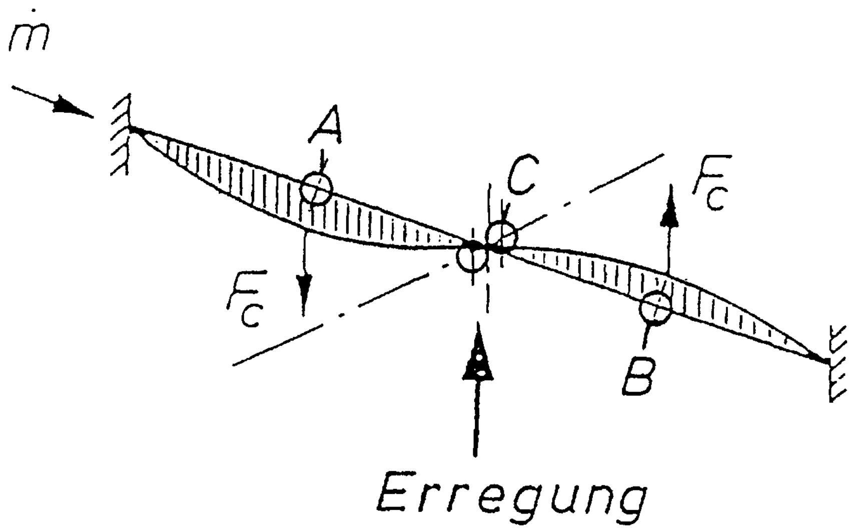


Fig. 1

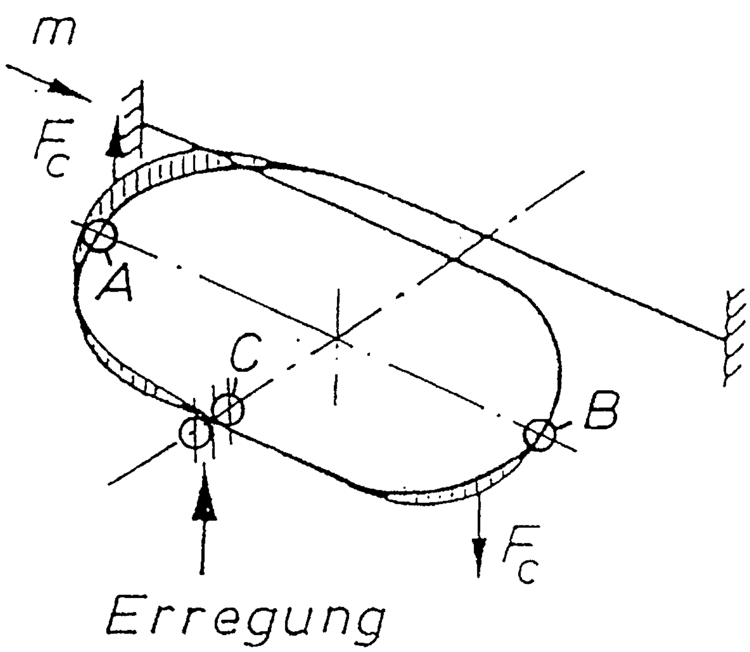


Fig. 2

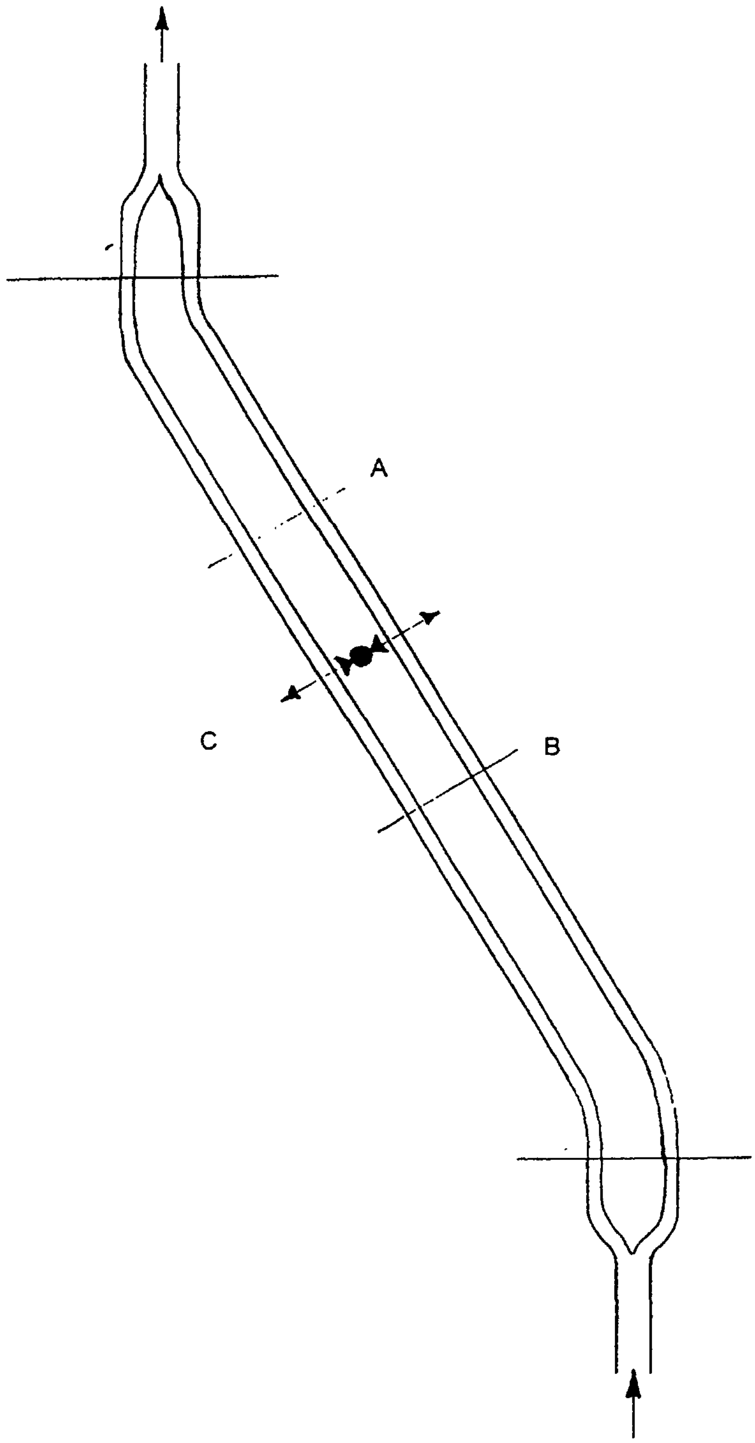


Fig. 3

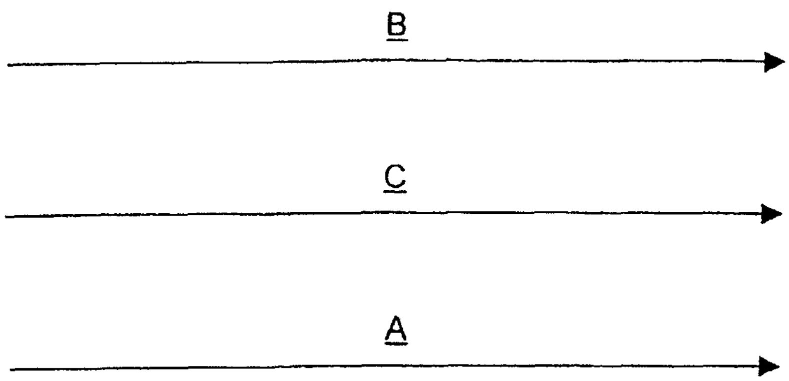


Fig. 4

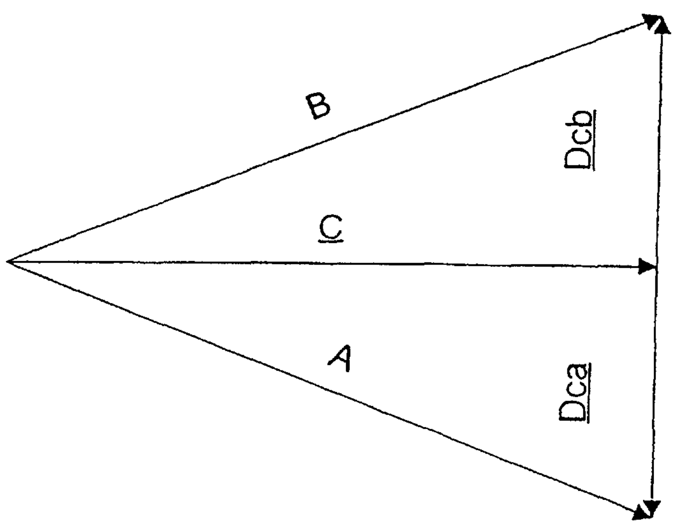


Fig. 5

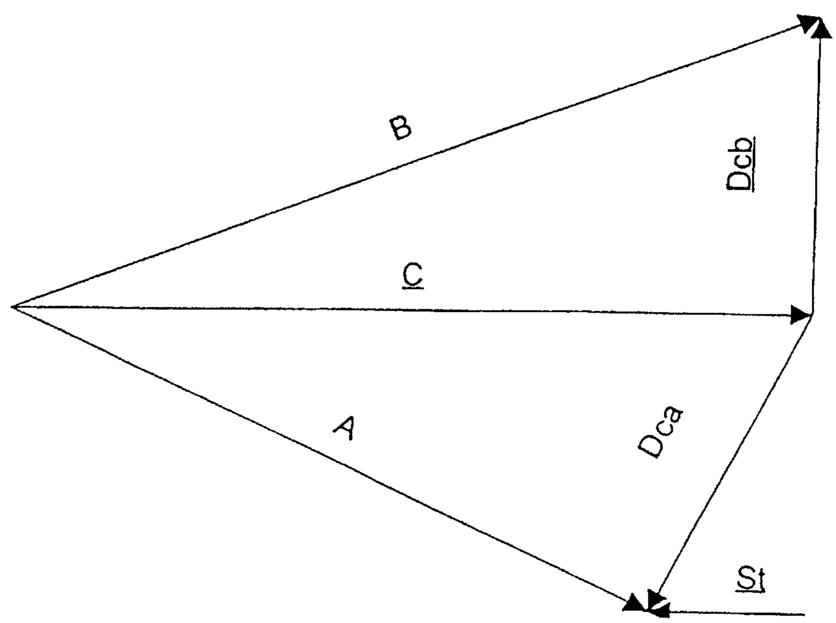


Fig. 6

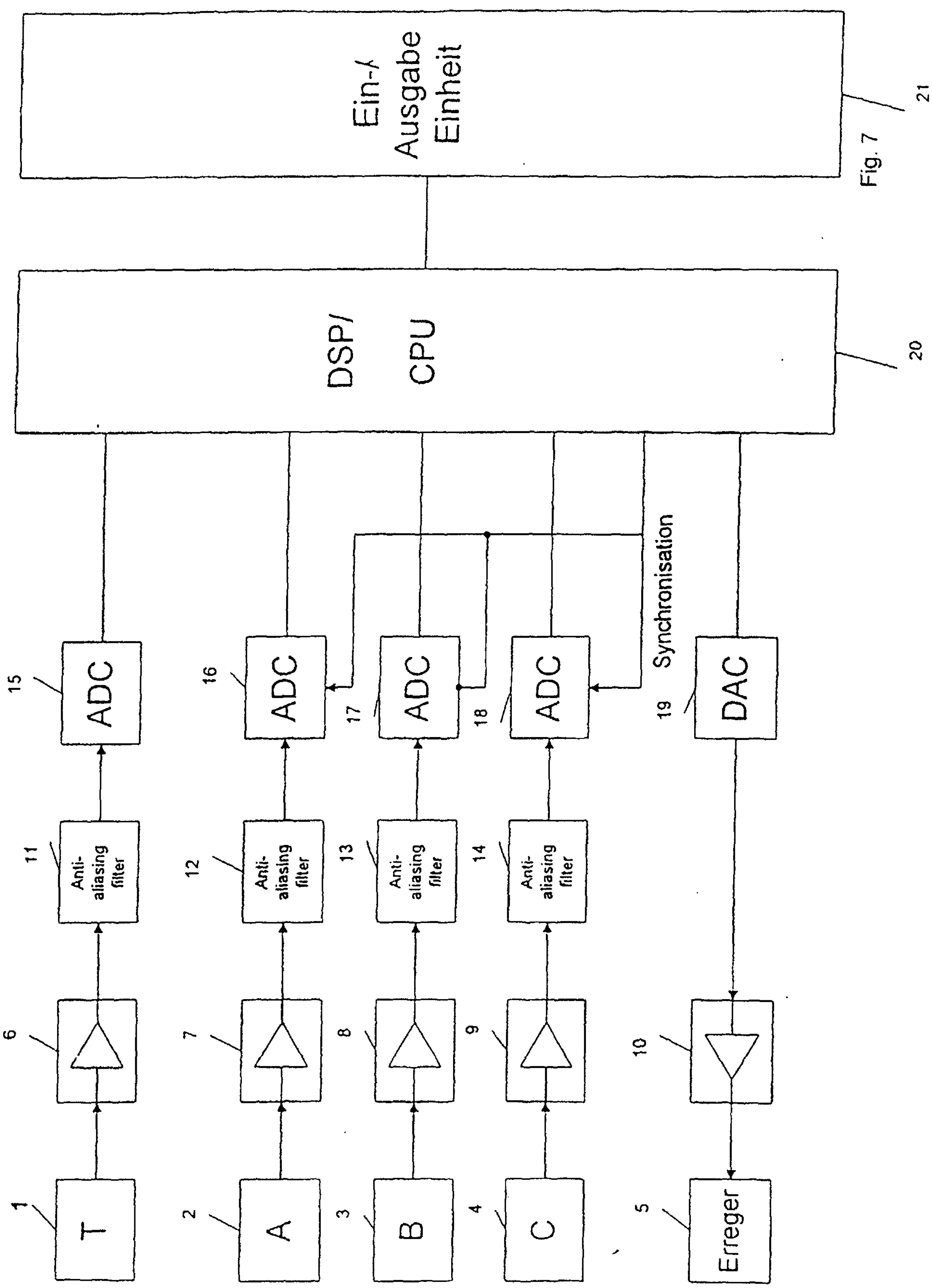

Ein-/
Ausgabe
Einheit
21
DSP/
CPU
20
Synchronisation
ADC
15
ADC
16
ADC
17
ADC
18
DAC
19
Anti-
aliasing
filter
11
12
13
14
6
7
8
9
10
T
1
A
2
B
3
C
4
Erreger
5


Fig. 7

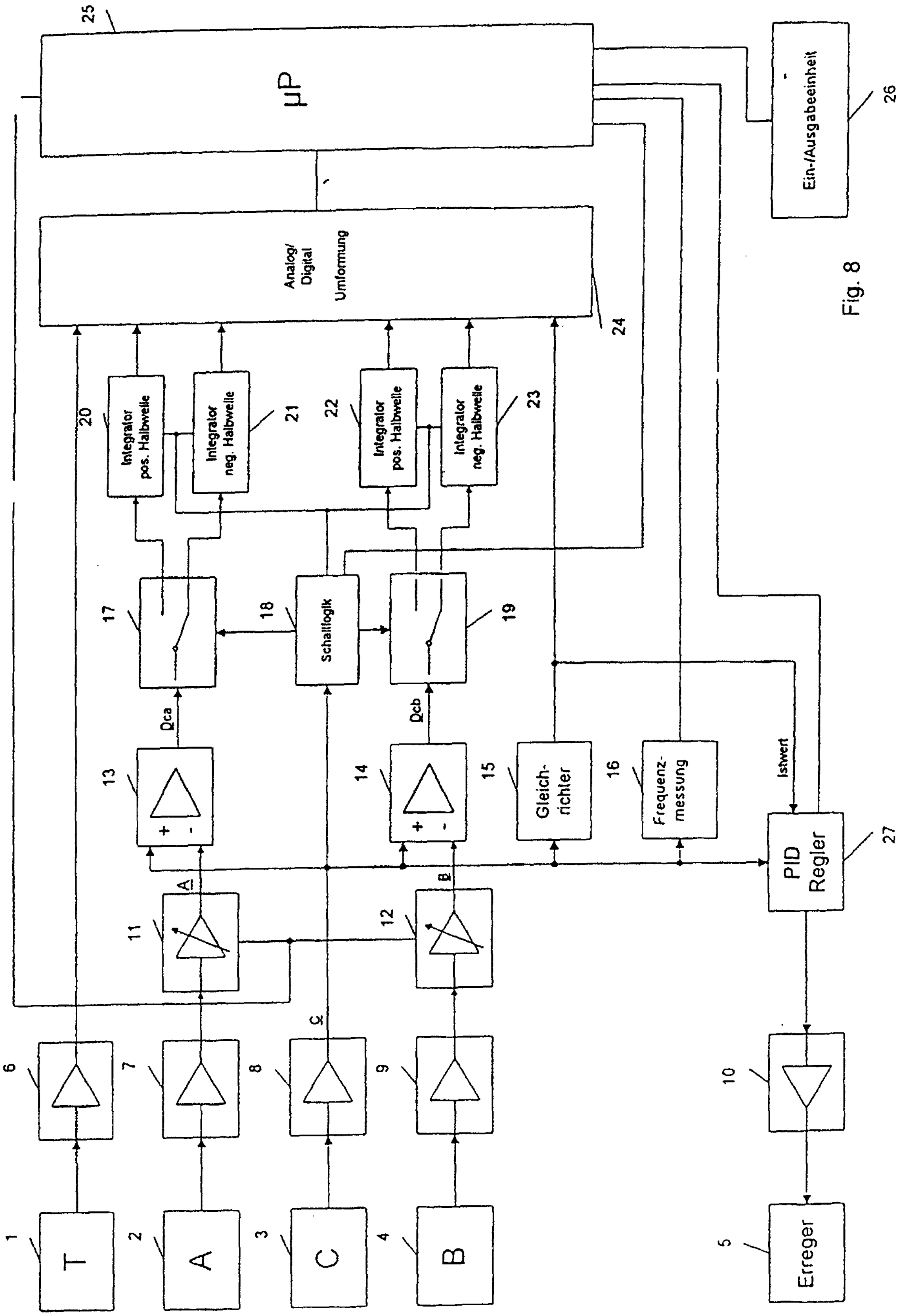
µP
Analog/
Digital
Umformung
Ein-/Ausgabeeinheit
Integrator
pos. Halbwelle
Integrator
neg. Halbwelle
Integrator
pos. Halbwelle
Integrator
neg. Halbwelle
Schaltlogik
Qca
Qcb
Gleich-
richter
Frequenz-
messung
Istwert
PID
Regler
T
A
C
B
Erreger
1
2
3
4
5
6
7
8
9
10
11
12
13
14
15
16
17
18
19
20
21
22
23
24
25
26
27

Fig. 8

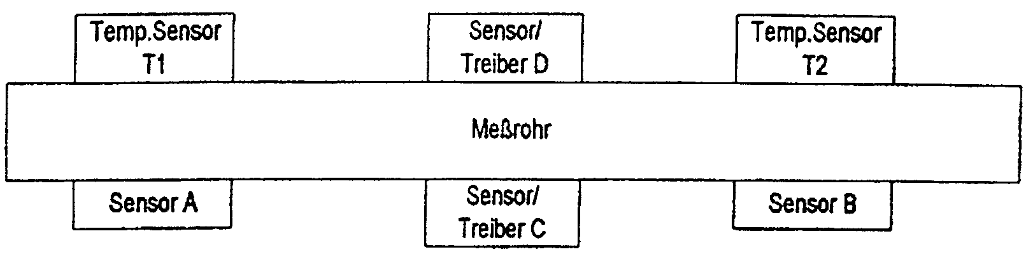
Temp.Sensor
T1
Sensor/
Treiber D
Temp.Sensor
T2
Meßrohr
Sensor A
Sensor/
Treiber C
Sensor B

Fig 9

| Betriebszustand | Sensor A | Sensor B | Sensor/ Treiber C | Sensor/ Treiber D | Sensor T1 | Sensor T2 |
|---|---|---|---|---|---|---|
| 1. Alle Sensoren in Ordnung | Massestrom Berechnung | Massestrom Berechnung | Qm (Kompensation von Nullpunkt verschiebungen) | Schwingungs-erzeugung | Temperatur -messung | Temperatur-messung (optional) |
| 2. Ausfall Sensor A | Ausfall | Massestrom Berechnung | Massestrom Berechnung | Schwingungs-erzeugung | Temperatur -messung | Temperatur-messung (optional) |
| 3. Ausfall Sensor B | Massestrom Berechnung | Ausfall | Massestrom Berechnung | Schwingungs-erzeugung | Temperatur -messung | Temperatur-messung (optional) |
| 4. Ausfall Sensor / Treiber C | Massestrom Berechnung | Massestrom Berechnung | Ausfall | Schwingungs-erzeugung | Temperatur -messung | Temperatur-messung (optional) |
| 5. Ausfall Sensor / Treiber D | Massestrom Berechnung | Massestrom Berechnung | Schwingungs-erzeugung | Ausfall | Temperatur -messung | Temperatur-messung (optional) |
| 6. Massestrom Berechnung | Massestrom Berechnung | Massestrom Berechnung | Qm (Kompensation von Nullpunkt verschiebungen) | Schwingungs-erzeugung | Ausfall | Temperatur-messung |
| 7. Ausfall Sensor T2 | Massestrom Berechnung | Massestrom Berechnung | Qm (Kompensation von Nullpunkt verschiebungen) | Schwingungs-erzeugung | Temperatur -messung | Ausfall |
| 8. Erhöhte Treiberleistung | Massestrom Berechnung | Massestrom Berechnung | Qm (Kompensation von Nullpunkt verschiebungen) | Schwingungs-erzeugung | Temperatur -messung | Temperatur-messung (optional) |

Fig 10